# EUROPEAN PATENT SPECIFICATION

(11) **EP 3 560 275 B1**
(45) Date of publication and mention of the grant of the patent: **07.10.2020**
(21) Application number: 16847600.0
(22) Date of filing: 21.12.2016
(51) Int. Cl.: H05B 1/02, H05B 3/44

(54) **HEATING DEVICE**
HEIZVORRICHTUNG
DISPOSITIF DE CHAUFFAGE

(43) Date of publication of application: 30.10.2019
(73) Proprietor: Tecna S.p.A., 40024 Castel San Pietro Terme (IT)
(72) Inventor: LOLLI, Andrea, 40054 Budrio (IT)
(74) Representative: Modiano, Micaela Nadia
(86) International application number: PCT/IT2016/000301
(87) International publication number: WO 2018/116326

(56) References cited:
- WO-A1-2004/049760
- WO-A1-2005/078356
- DE-A1- 10 051 169
- DE-A1-102012 025 299
- US-A- 5 525 182

## Description

The present invention relates to a heating device.

In many industrial contexts, the necessity exists of removing panels made of materials of various types from the underlying surfaces, to which they are fixed by virtue of a respective layer of adhesive.

For example, such need arises in the automotive sector, since the production of vehicles often entails fixing panels or sheet-like elements in general to the supporting structure, by way of the use of an adhesive.

The carrying out of maintenance or repair work therefore requires the subsequent removal of such panels, which according to conventional methods is performed by way of mechanical action (with a chisel or other cutting tools) or by resorting to a conventional heat source, of the type of a naked flame or a heat gun. The heat source makes it possible in fact to bring the adhesive to its glass transition temperature, at which it loses its mechanical properties and therefore the capacity to make the panel adhere to the underlying surface.

Both of such implementation solutions are not devoid of drawbacks, however.

The use of chisels or other cutting tools, to mechanically carry out the removal, results in damage not only to the panel removed (which is tolerable in the majority of cases, but still unwelcome in some), but also to the underlying surface, on which it is therefore necessary to provide for a subsequent restoration operation, with additional costs and uncertainties regarding the effectiveness of the restoration.

Besides, conventional heat sources produce an intense localized heating with an uncontrolled temperature, thus causing numerous problems.

First of all in fact, sometimes the impossibility of controlling the temperature entails the damaging of the panel owing to an excess of applied heat, which moreover produces an unwanted, and needless, increase in costs.

Furthermore, conventional tools capable of emitting heat are often very unwieldy, not at all safe and even less versatile, since they cannot be adapted in a practical manner to the different shapes of the panels on which they act.

It should be noted in addition that, in the automotive sector proper, the removal usually affects the outermost panels of structures made up of a plurality of panels arranged in sandwich fashion, where a respective layer of adhesive is interposed between each pair of adjacent panels.

An additional, more frequent and severe limitation deriving from the lack of control of the temperature is therefore constituted by the fact that the uncontrolled heating produced by conventional sources is often not limited to affecting the panel of interest, but spreads to affect the underlying panels and layers of adhesive, which in turn lose their mechanical properties, thus compromising the integrity of the entire "sandwich".

This evidently entails further drawbacks and supplementary restoration costs, and nowadays is therefore entirely unacceptable.

The aim of the present invention is to solve the above mentioned problems, by providing a device that is capable of producing intense localized heating.

Within this aim, an object of the invention is to provide a device that carries out the desired heating of a specific target, without affecting and involving the surrounding structures.

Another object of the invention is to provide a heating device that makes it possible to effectively control the intensity of the heat produced.

Another object of the invention is to provide a heating device that is versatile, and that can operate optimally on different types and shapes of surfaces and on different materials.

Another object of the invention is to provide a heating device that ensures a high reliability of operation, which does not compromise the integrity of the object heated and/or of the surrounding structures and which does not entail risks for the health and safety of the user.

Another object of the invention is to provide a heating device that adopts an alternative technical and structural architecture to those of conventional devices.

Another object of the invention is to provide a heating device that can be easily implemented using elements and materials that are readily available on the market.

Another object of the invention is to provide a heating device that is low cost and safely applied.

This aim and these and other objects which will become better apparent hereinafter and are achieved by a heating device according to claim 1.

Further characteristics and advantages of the invention will become better apparent from the description of a preferred, but not exclusive, embodiment of the heating device according to the invention, which is illustrated by way of non-limiting example in the accompanying drawings wherein:

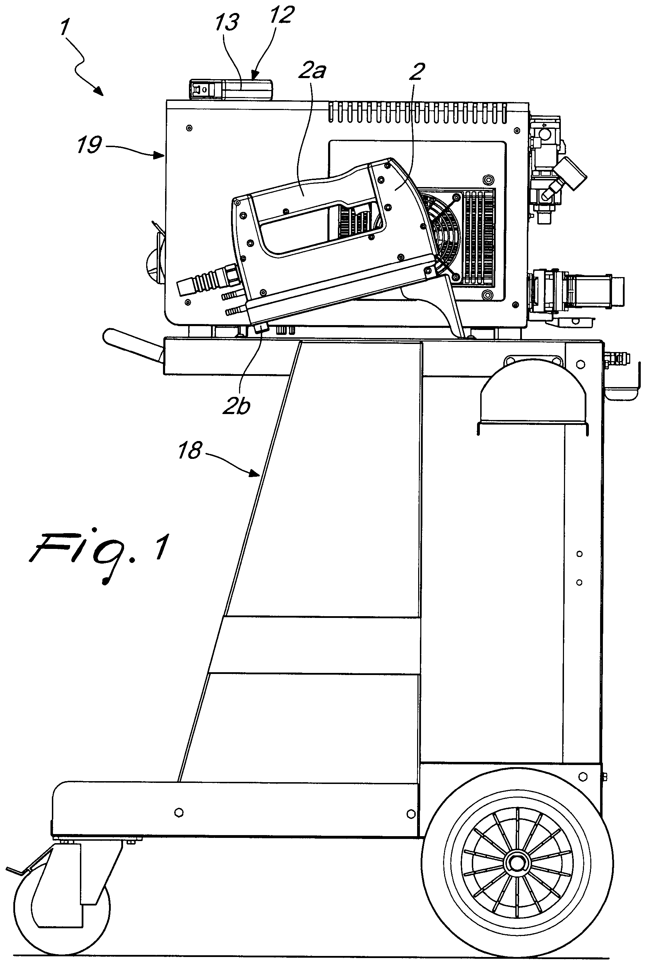

Figure 1 is a side view of the heating device according to the invention;

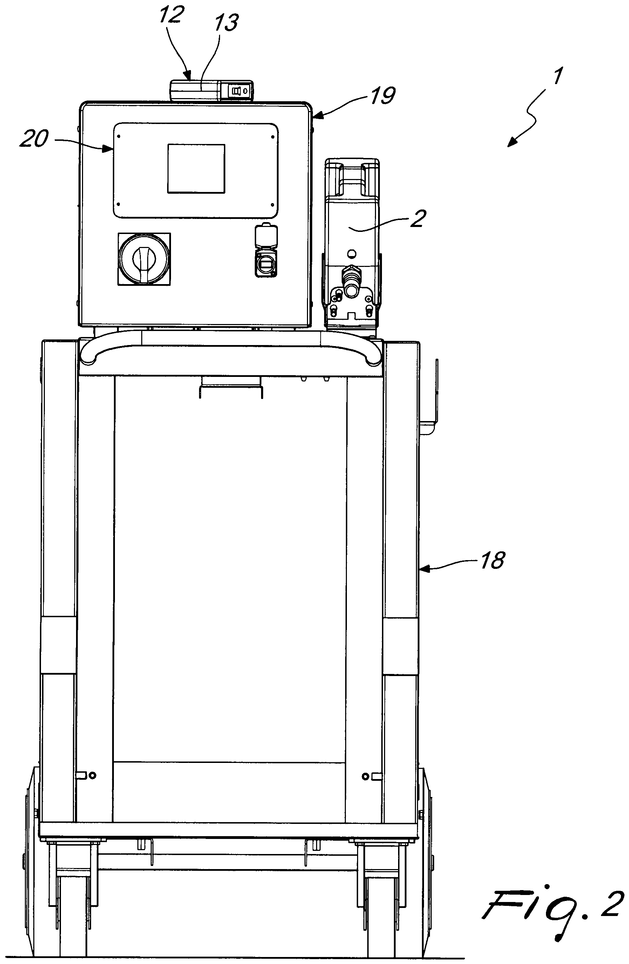

Figure 2 is a front elevation view of the heating device of Figure 1;

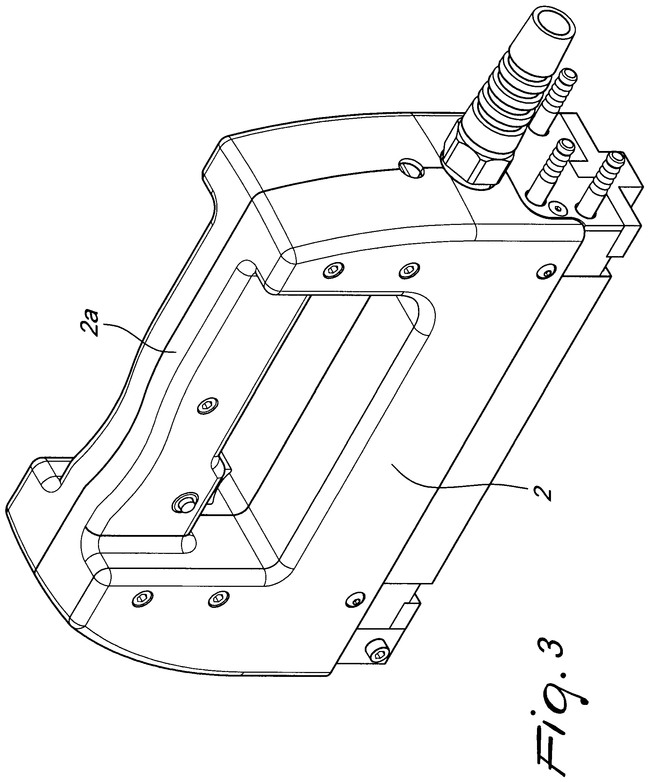

Figure 3 is a perspective view from above of the shell that accommodates the radiation generator;

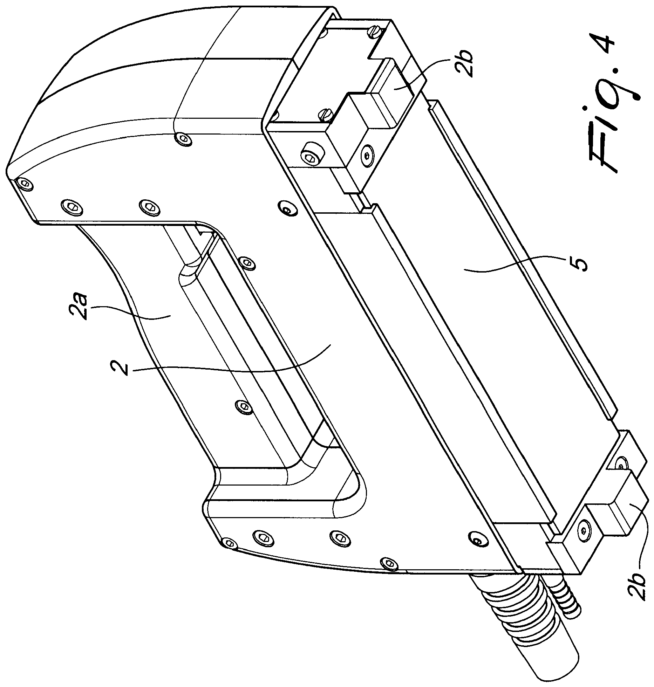

Figure 4 is a perspective view from below of the shell of Figure 3;
Figure 5 is a cross-sectional view of the shell in Figure 3, taken along a longitudinal plane;
Figure 6 is a cross-sectional view of a detail of the shell of Figure 3, taken along a transverse plane, which shows the compartment and the arrangement of the sources;
Figure 7 is a perspective view of a further component of the device according to the invention.

With particular reference to the figures, the reference numeral 1 generally designates a heating device that can be used to raise the temperature of an object of interest, substantially in any industrial sector in which such need arises.

In this regard it should be noted that a typical application of the device 1 is the removal of objects of the type of panels or other sheet-like elements, which are made to adhere to an underlying surface by way of a layer of adhesive.

In such context therefore, the intense (localized) heating generated by the device 1 makes it possible to raise the temperature of the adhesive until it reaches its glass transition temperature, or in any case until it loses its mechanical properties that enable it to make the panel adhere to the surface, thus allowing the removal.

Using the device 1, it is therefore possible to remove panels or other sheet-like elements of any material (metallic alloys based on steel, aluminum, or the like, non-metallic composites based on carbon, polymeric materials, etc.), coupled by way of an adhesive of any type to underlying surfaces which in turn can be many and varied, while remaining within the scope of protection claimed herein.

In any case it is possible that the device 1 will be employed to remove panels from underlying surfaces forming part of automobiles or other vehicles, since a typical (but, as noted, not exclusive) application of the device 1 is in the automotive sector, for repair, substitution and/or maintenance operations on chassis, bodywork or the like.

Moreover, the heat that the device 1 is capable of generating, according to the methods that will be described below, can be used to obtain on adhesives of various nature the opposite effect to that described above, and therefore the acceleration or the activation of the process of polymerization of the adhesive, as required in the assembly (and therefore no longer the removal) of panels of various materials.

It should still be noted however once again that the protection claimed herein should be understood to be extended to the removal of panels of other types and/or in other sectors and, even more generically, to the heating of objects of any type, according to the specific requirements.

The heating device 1 comprises at least one shell 2, which defines internally a compartment 3 for accommodating a generator 4 of infrared radiation.

The compartment 3 (a part thereof) is delimited by at least one wall 5 that is transparent to infrared radiation, in order to allow the delivery of the infrared radiation through it to the outside.

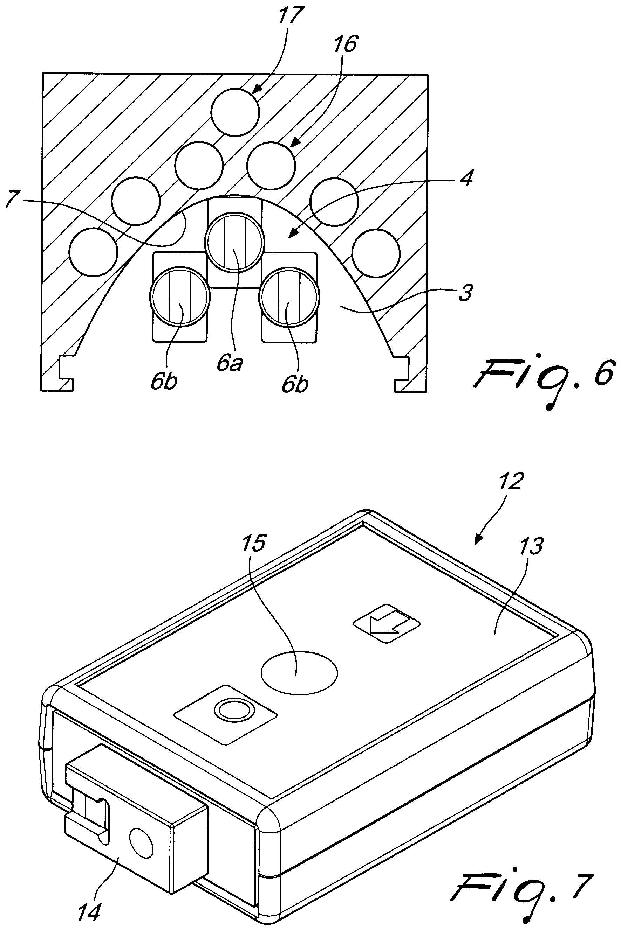

According to the invention, the generator 4 comprises a plurality of sources of infrared radiation 6a, 6b, each one of which has an elongated shape structure. Such sources 6a, 6b are arranged inside the compartment 3 with longitudinally symmetrical distribution. In more detail, and as can be seen also from the accompanying Figure 6, in the (substantially offset) distribution a first central source 6a is interposed between respective lateral sources 6b, which are arranged closer to the transparent wall 5 with respect to the central source 6a.

Furthermore, on the opposite side with respect to the transparent wall 5, the compartment 3 is delimited by a reflective wall 7 which is curved and convex, and longitudinally symmetrical. The profile in cross-section (substantially constant for the entire longitudinal extension of the compartment 3) is clearly visible in the cross-section shown in Figure 6 (for an illustrative and non-limiting embodiment of the application of the invention).

For example, the reflective wall 7 can have a profile in cross-section that is substantially parabolic (more or less approximate), with each cross-section of the central source 6a arranged substantially facing the respective vertex of the ideal parabola described by the profile in cross-section of the reflective wall 7.

The choice to arrange at least three sources 6a, 6b with offset symmetrical distribution, and to have a curved and convex reflective wall 7, makes it possible to best convey the infrared radiation delivered by the sources 6a, 6b, concentrating the heating on an area corresponding to the outside area adjacent to the transparent wall 5. In more detail, the intense heating affects an area that has a substantially similar shape to that of the transparent wall 5; typically, the area will further have a similar length to that of the transparent wall 5, while the width will be smaller than that of the transparent wall 5.

It should be noted therefore that by adopting such curved and convex shape structure of the reflective wall 7, and by having made use of the previously-described distribution of the sources 6a, 6b, the heat generated by the latter determines the localized heating of an object (a panel or the like), arranged in the above mentioned outside area, thus achieving the set aim.

In more detail, in a first embodiment of significant practical interest (shown moreover in the accompanying figures and clearly distinguishable in particular in Figure 6), the generator 4 comprises a first central source 6a and a (single) pair of lateral sources 6b, which are arranged closer to the transparent wall 5 (with respect to the central source 6a).

In a second embodiment, the generator 4 comprises a first central source 6a, a first pair of lateral sources 6b, which are arranged closer to the transparent wall 5 (with respect to the central source 6a) and are interposed between a second pair of lateral sources 6b, which are even closer to the transparent wall 5 (with respect to the central source 6a and also with respect to the first pair of lateral sources 6b).

In the two embodiments mentioned above therefore, the generator 4 anyway comprises a central source 6a, and respectively two or four lateral sources 6b; the possibility is not ruled out however of providing devices 1 according to the invention in which the generator 4 comprises a different number of sources 6a, 6b.

With further reference to an embodiment of significant practical interest, cited by way of non-limiting illustration of the application of the invention, each source 6a, 6b is a quartz halogen lamp, although of course it should be noted that other practical embodiments for the sources 6a, 6b are not ruled out.

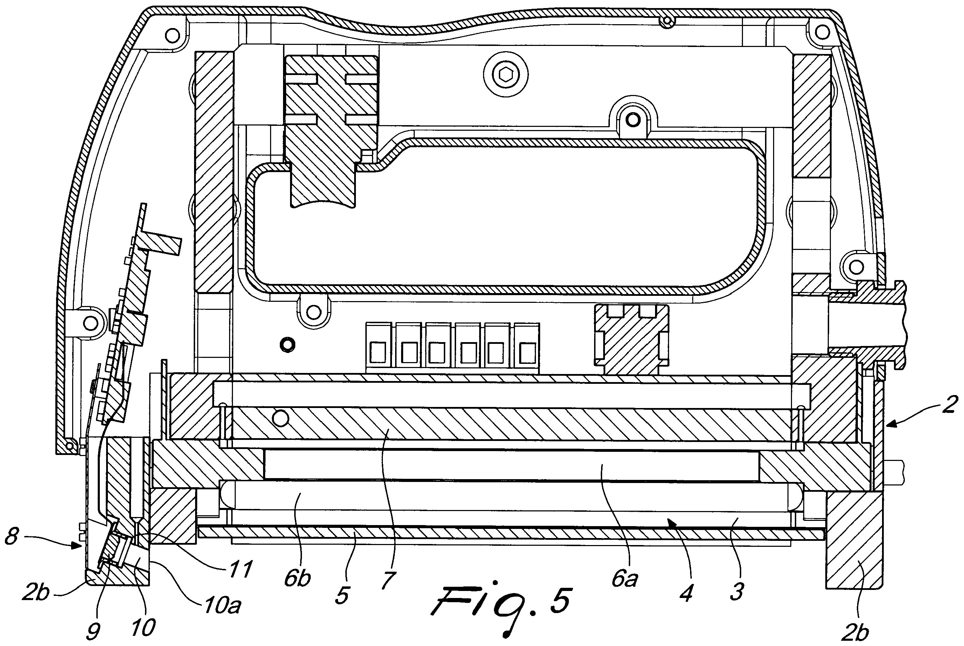

Conveniently, the heating device 1 according to the invention comprises at least one apparatus 8 for measuring the temperature, which is provided with at least one main sensor 9 (Figure 5), in order to carry out the measurement instant by instant of the temperature value assumed by the object to be heated, when it is arranged at the outside area adjacent to the transparent wall 5.

The measurement apparatus 8 is controlled by an electronic unit for the control and management of the power delivered by the sources 6a, 6b, which is chosen for example to be of the type of a microcontroller (preferred choice), a control unit, a personal computer, or the like. The possibility to adjust the power delivered (with methods that will be explained in the following pages, in relation to some possible embodiments), based on the information about the temperature progressively reached by the panel (object) to be heated, enables an exact adjustment and avoids energy wastage associated with an excessive increase of the temperature (while at the same time guarding against the risk of damaging the panel proper, or the adjacent structures).

More generally, the choice to use a measurement apparatus 8 controlled by an electronic control and management unit makes it possible to provide various and interesting operating modes for the device 1.

The electronic unit comprises in fact instructions for selectively executing a manual mode, an automatic mode and a variable temperature mode (and the possibility is not ruled out of programming further possible operating modes).

In the manual mode, there is simply a constant power output, according to a value chosen by a user: such mode can be adopted when it is necessary to heat an object by supplying heat constantly but with no limitation on the temperature value of the object proper (so in fact, in this case the apparatus 8 is not used).

In the automatic mode on the other hand, the value of power delivered is controlled as a function of a maximum temperature value, chosen by the user, for the object to be heated.

In such operation option therefore, an object can be heated to a chosen temperature value, while at the same time automatically preventing the temperature of the object from exceeding such value, since the electronic unit takes care of modulating the power so as to control the temperature value based on the readings of the apparatus 8.

It should be noted that in such operating mode, the user can be given the possibility to choose not only the maximum temperature value, as already indicated, but also a power value to be dispensed.

The variable temperature mode can be adopted when it is desired to generate heat of variable temperature over time and for a time duration determined in advance. This for example can be useful to reduce the drying times of paints or the polymerization times of structural adhesives.

Such mode is in fact composed of a plurality of steps of pre-configurable duration, each one of which operates according to respective and pre-configurable maximum temperature values for the object to be heated (and optionally, as has been seen for the previous mode, according to respective values of power delivered).

So in fact, in such variable temperature mode, various steps are executed (the number of which is chosen at will), each one of which corresponds to an automatic mode, but with parameters (and duration) that are in each instance different (and freely chosen/set by the user).

In the preferred embodiment, cited here for the purposes of non-limiting example of the application of the invention, the main sensor 9 is a pyrometer, directed toward the outside area adjacent to the transparent wall 5. In this manner, the pyrometer can perform the desired measurement of the temperature value assumed by the object to be heated (when it is at said outside area), without coming into contact with it.

Even more specifically, and with further reference to the preferred embodiment, the main sensor 9 (a pyrometer or the like) is facing a short side of the transparent wall 5, which has an elongated rectangular shape.

It should be noted that by adopting a rectangular shape for the transparent wall 5, the heat generated by the sources 6a, 6b is concentrated in an adjacent area constituted substantially by a strip which is narrow (width smaller than the transparent wall 5) and long (as long as the transparent wall 5), with the pyrometer being capable of measuring the temperature of the portion of the object arranged in the center of such strip.

By moving the shell 2 along the panel to be heated, it will therefore be possible to progressively affect adjacent strips thereof, until it is exposed to infrared radiation for its entire extension.

Advantageously, the pyrometer that constitutes the main sensor 9 is accommodated in an inclined duct 10 (preferably cylindrical), facing the outside area with a mouth 10a thereof (Figure 5). Furthermore, such pyrometer is spaced apart from such mouth 10a, and therefore from the short side of the transparent wall 5.

The choice to arrange the pyrometer inside a duct 10 is found to be of exceptional utility. In fact, the duct 10 limits the incidence on the pyrometer of the infrared radiation produced by the sources 6a, 6b and reflected by the object to be heated; in this manner the main sensor 9 detects only the infrared radiation generated by the object proper.

Furthermore, the duct 10 contributes to reducing the viewing angle of the main sensor 9 (of the pyrometer), thus concentrating the measurement only on the area heated by the infrared radiation.

It should also be noted that inside the duct 10 a stream of air is made to enter, by way of a connecting duct 11, which keeps the lens of the pyrometer clean.

Conveniently, the apparatus 8 also comprises an auxiliary temperature sensor, in order to measure instant by instant the temperature value inside the duct 10 proper.

This enables an optimal appraisal of the temperature value of the object to be heated, where such value corresponds to the reading taken by the main sensor 9, minus the contribution deriving from the real temperature of the duct 10, measured by the auxiliary sensor.

Positively, the device 1 according to the invention comprises means of calibration 12 of the measurement apparatus 8 (Figure 7), for the optimal calibration of the apparatus 8 proper as a function at least of the color and/or of the surface finish of the specific object in each instance to be heated.

Also according to the invention, the means of calibration 12 comprise a box-like body 13 (separate from the shell 2) which accommodates a calibration sensor, constituted by an additional pyrometer, chosen to be of the type chosen for the main sensor 9, and a contact temperature sensor (for example, but not exclusively, silicon based).

The calibration sensor and the temperature sensor are previously arranged on the object to be heated for a twofold measurement of the temperature (carried out by them) and the calculation of the emissivity coefficient of the specific object in each instance to be heated (such coefficient depending on surface parameters like the color and/or the finish).

The calibration is carried out by resting the box-like body 13 on the object to be heated at an interface 14, defined by the body 13 and affected by the calibration sensor (the additional pyrometer) and by the contact temperature sensor.

In any case, starting the means of calibration 12 (by way of a switch 15 for example provided on the body 13) the readings of the calibration sensor and of the contact temperature sensor are activated and when the two readings have a zero derivative the device 1 (the electronic unit for example) will be able to calculate the ratio between the temperatures read and consequently the emissivity coefficient of the panel that is being heated. Such coefficient (which is different in each instance) is therefore used to compensate the reading of the pyrometer that constitutes the main sensor 9 so as to obtain a reading of the temperature that is not influenced by the material and by the surface finish of the specific object which is being operated on in each instance.

Advantageously, the device 1 comprises a first cooling circuit 16 using water and a second cooling circuit 17 using air (Figure 6) for the shell 2 and/or for the sources 6a, 6b.

Although the possibility is not ruled out of using only one circuit 16, 17, the choice to use a double circuit 16, 17 makes it possible to ensure an optimal cooling of the shell 2, which can thus be kept at a low temperature (35° for example) and be easily held by the operator (the only part that is actually hot will be the transparent wall 5), without risk of burns or in any case of having to suffer excessive temperatures.

Positively, the heating device 1 comprises an inverter (functionally associated with the electronic control and management unit), for powering the sources 6a, 6b with direct current, of variable intensity (chosen as a function of the information received from the measurement apparatus 8). In this case therefore, the adjustment of the power is carried out on the direct current.

Such choice of power supply ensures the substantial absence of electromagnetic fields, and in any case the absence of flickering in the light radiation emitted, thus rendering the use of the device 1 safe for the operator. It should be noted in any case that the power supply of the sources 6a, 6b (and the adjustment of the power by the electronic control and management unit) can also occur by way of alternating current, for example by modulating its value by way of semiconductors and using as feedback the temperature value read by the pyrometer that constitutes the main sensor 9.

Conveniently, the shell 2 is provided with a handle 2a (on the opposite side with respect to the compartment 3 and to the transparent wall 5), in order to allow a practical movement thereof by an operator.

Moreover, precisely in order to facilitate the use of the shell 2 and of the sources 6a, 6b, which must be brought proximate to the object to be heated and moved along it, the shell 2 proper has compact dimensions, and a length for example of a few tens of centimeters.

In this manner, the operator can easily grasp and move the shell 2 (and the sources 6a, 6b), without having to resort to auxiliary support tools and without particular effort.

It should likewise be noted that the shell 2 and the box-like body 13, by virtue of their contained dimensions, can be easily moved along a building by way of a trolley 18, thus rendering the experience of using the device 1 according to the invention absolutely convenient.

The electronic control and management unit can also be placed on the trolley 18, for example accommodated in a casing 19, preferably provided with a display 20, on which the salient information will be displayed and through which the operator can set the desired operating mode.

It should be noted finally that the shell 2 (alternatively or, preferably, in addition to the handle 2a) can also be provided with an attachment (a threaded hole or other type of interlock) for the stable and removable mechanical coupling to a stand or to an orientable support in order to use the device 1 in static mode, for example in order to carry out a prolonged heating of panels of large dimensions.

Use of the device according to the invention is the following.

In order to carry out the process of removing panels in the most efficient manner possible, or in any case in order to heat objects of any type, while avoiding damage to other parts not directly involved in the process, it is possible to use the device 1 according to the invention.

As has been seen in fact, the device 1 is capable of generating an intense controlled heating of an object arranged in the outside area adjacent to the transparent wall 5, by virtue of the infrared radiation generated by each one of the sources 6a 6b, which are arranged in the compartment 3.

The heat is optimally conveyed to an area of reduced dimensions, by virtue of the arrangement of the sources 6a, 6b and of the presence of the curved and convex reflective wall 7. For example, such area can be a strip as long as the length of the shell 2 (and of the sources 6a, 6b) and a few centimeters wide, substantially as wide as the transparent wall 5.

This therefore makes it possible to concentrate the radiation emitted on a sufficiently small area to ensure a rapid heating of the panel or other object affected, without affecting surrounding structures.

For the previously described application in the automotive sector, the application of infrared radiation focused on the panel to be removed enables a rapid and localized increase of the temperature: the rapidity ensures that the heat generated does not propagate to the deeper layers of the adhesive, thus preserving their functional integrity, and at the same time the control over the temperature of the heated surface prevents the surface temperature from reaching values that are such as to damage the panel that is to be removed and therefore enabling its possible reuse.

This also makes it possible to guard against damage to the underlying surfaces or to other panels of the "sandwich" structures that are sometimes found in the bodywork or chassis of vehicles.

The shape of the reflective wall 7 enables a focusing of the infrared radiation when the sources 6a, 6b are used close to the object to be heated (at a distance of a few centimeters).

In this regard, it should be noted that on the shell 2 special feet 2b are provided, which protrude beside the short sides of the transparent wall 5, and which can be rested on the object to be heated and which during use help the operator to maintain the optimal distance between the sources 6a, 6b and the object to be heated.

In any case it should be observed that the peculiar mode of delivering the heat also offers a different possibility to use the device 1 according to the invention.

In fact, at a distance of approximately 500mm from the sources 6a, 6b a supply of heat can be observed which is of lower intensity but distributed over a greater area.

Such supply of heat, owing to the low intensity, does not damage the structures surrounding the object to be heated, when it is arranged in the outside area immediately adjacent to the transparent wall 5 as has been seen in the foregoing pages.

At the same time, by arranging the object at a greater distance from the generator 4 and from the shell 2, indicatively for example at at least 500mm, it is possible to produce a heating that is more contained but more uniformly distributed over a greater area, which can be of interest in some applications.

The chart below shows the concepts explained in the foregoing paragraphs.

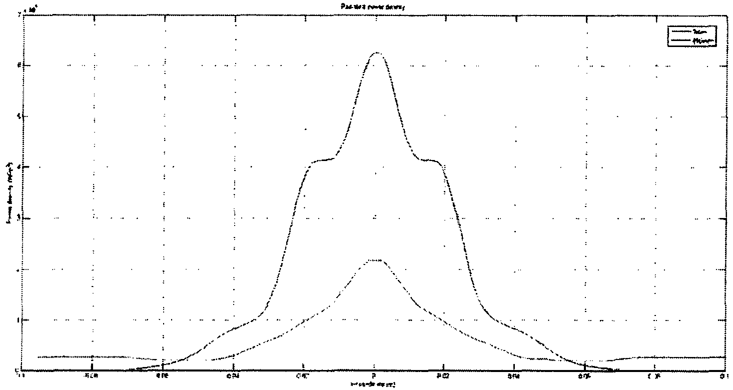

The chart shows the progression of the density of radiation emitted (in W/m²) both at a zero distance from the sources 6a, 6b, i.e. when the object to be heated is arranged in contact of the feet 2b and therefore at the point of maximum focus of the radiation (the curve with the most pronounced peak), and also at a distance of 450 mm from them. As noted, at a zero distance there is an extremely strong localized heating, concentrated in a strip of a few centimeters (at the sides of the peak the heat supplied falls sharply), while at a distance of around a half-meter a heat is produced that is broader but less intense, which does not damage structures surrounding the panel to be heated (when it is rested on the feet 2b), but which can be used in other applications (for example in order to facilitate the polymerization of the adhesive used for the fixing of panels, optionally selecting the variable temperature operating mode).

It should be noted furthermore that the device 1 is provided with an apparatus 8 for measuring the temperature which is capable of controlling the quantity of power supplied and therefore of preventing the excessive overheating of the parts subjected to irradiation, thus guarding against any damage.

More generally, it has already been pointed out in the foregoing pages that the electronic control and management unit offers various and interesting operating modes.

The device 1 has been shown to be absolutely safe for the operator, owing to the absence of electromagnetic fields, owing to the use of infrared radiation, which is not harmful to humans, and owing to the use of cooling circuits 16, 17 that keep the temperature low, thus enabling the operator to grasp the shell 2 easily and without harm (while ensuring an elevated heating, for example up to 250kW/m² of power density delivered).

For use on a panel therefore, the operator can grasp the shell 2 at the handle 2a and, after starting the device 1, progressively move the shell 2 proper in order to affect adjacent strips of the panel, until its entire extent has been heated.

It should likewise be noted that the use of infrared radiation enables the heating at a distance of the object of interest, without the sources 6a, 6b or the shell 2 needing to have the same shape or contour as the panel that is to be heated. This highlights the extreme versatility of the device 1, in that as the shape of the panel, or of the object, to be heated varies, the operator can always use the same device 1 to carry out the heating, since the radiation emitted will adapt to the shape of the object proper.

Furthermore, the heating mode selected in advance can be effectively used on various types of materials (further confirmation of the versatility of the invention).

Finally, the presence of the means of calibration 12 ensures optimal readings with the varying of the color and of the surface finish of the object to be heated, and such functionality is obtained with a simple procedure (described previously in the foregoing pages), which does not require specific skills on the part of the operator.

The invention, thus conceived, is susceptible of numerous modifications and variations, all of which are within the scope of the appended claims.

## Claims

1. A heating device, which comprises at least one shell (2) which defines internally a compartment (3) for accommodating a generator (4) of infrared radiation, said compartment (3) being delimited at least by a wall (5) that is transparent to infrared radiation, for delivering infrared radiation to the outside, said generator (4) comprising a plurality of sources of infrared radiation (6a, 6b) which have an elongated shape structure, said sources (6a, 6b) being arranged parallel to each other within said compartment (3) with longitudinally symmetrical distribution, a first central one of said sources (6a) being interposed between respective lateral sources (6b), which are arranged closer to said transparent wall (5) with respect to said central source (6a), on the opposite side with respect to said transparent wall (5) said compartment (3) being delimited by a curved and convex reflective wall (7), longitudinally symmetrical, for conveying the infrared radiation delivered by said sources (6a, 6b) to an outside area adjacent to said transparent wall (5) and the localized heating of an object, arranged in said outside area, said heating device comprising at least one apparatus (8) for measuring the temperature, provided with at least one main sensor (9), for the measurement instant by instant of the temperature value assumed by the object to be heated, when it is arranged at said outside area adjacent to said transparent wall (5), said apparatus (8) being controlled by an electronic unit for the control and management of the power delivered by said sources (6a, 6b), said main sensor (9) being a pyrometer, directed toward said outside area adjacent to said transparent wall (5), for the measurement without contact of the temperature value assumed by the object to be heated, **characterized in that** it comprises means of calibration (12) of said measurement apparatus (8), for the optimal calibration of said apparatus (8) as a function at least of the color and/or of the surface finish of the specific object in each instance to be heated, said means of calibration (12) comprising a box-like body (13) which accommodates a calibration sensor, constituted by an additional pyrometer, chosen to be of the type of said main sensor (9), and a contact temperature sensor, said calibration sensor and said contact temperature sensor being previously arrangeable on the object to be heated for a twofold measurement of the temperature and the calculation of the emissivity coefficient of the specific object in each instance to be heated.

2. The heating device according to claim 1, **characterized in that** said generator (4) comprises a first central source (6a) and a pair of lateral sources (6b), which are arranged closer to said transparent wall (5).

3. The heating device according to claim 1, **characterized in that** said generator (4) comprises a first central source (6a), and a pair of lateral sources (6b) which are arranged closer to said transparent wall (5) and are interposed between a second pair of said lateral sources (6b), which are even closer to said transparent wall (5).

4. The heating device according to one or more of the preceding claims, **characterized in that** each one of said sources (6a, 6b) is a quartz halogen lamp.

5. The heating device according to claim 1, **characterized in that** said electronic unit comprises instructions to selectively execute a manual mode, corresponding to a constant power output, according to a value chosen by a user, an automatic mode, in which the power value delivered is controlled as a function of a maximum temperature value, chosen by the user, for the object to be heated, and a variable temperature mode, composed of a plurality of steps of pre-configurable duration, each one of said steps operating according to respective and pre-configurable maximum temperature values for the object to be heated.

6. The heating device according to claim 1 or 5, **characterized in that** said main sensor (9) is facing a short side of said transparent wall (5), having an elongated rectangular shape.

7. The heating device according to claim 1 or 6, **characterized in that** said pyrometer is accommodated in an inclined duct (10), facing said outside area with a mouth (10a) thereof, said pyrometer being spaced apart from said mouth (10a).

8. The heating device according to claim 7, **characterized in that** said apparatus (8) comprises an auxiliary temperature sensor, for the measurement instant by instant of the temperature value inside said duct (10), and the optimal appraisal of the temperature value of the object to be heated, which corresponds to the reading taken by said main sensor (9) minus the contribution deriving from the real temperature of said duct (10), measured by said auxiliary sensor.

9. The heating device according to one or more of the preceding claims, **characterized in that** it comprises a first cooling circuit (16) using water and a second cooling circuit (17) using air for said shell (2) and/or for said sources (6a, 6b).

10. The heating device according to one or more of the preceding claims, **characterized in that** it comprises an inverter, for powering said sources (6a, 6b) with direct current of variable intensity.

11. The heating device according to one or more of the preceding claims, **characterized in that** said shell (2) is provided with a handle (2a), for convenient movement by an operator, and/or with an attachment for stable and removable mechanical coupling to a stand or to an orientable support, for static use.

## Patentansprüche

1. Eine Heizvorrichtung, die mindestens ein Gehäuse (2) umfasst, das innen einen Raum (3) zur Aufnahme eines Erzeugers (4) von Infrarotstrahlung bestimmt, wobei der Raum (3) mindestens durch eine Wand (5) begrenzt ist, die durchlässig für Infrarotstrahlung ist, um Infrarotstrahlung nach außen abzugeben; wobei der Erzeuger (4) eine Vielzahl von Quellen für Infrarotstrahlung (6a, 6b) umfasst, die eine langgestreckte Formstruktur haben, wobei die Quellen (6a, 6b) mit in Längsrichtung symmetrischer Anordnung parallel zueinander innerhalb des Raums (3) angeordnet sind; wobei eine erste zentrale der Quellen (6a) zwischen entsprechenden seitlichen Quellen (6b) angeordnet ist, die näher an der durchlässigen Wand (5) angeordnet sind als die zentrale Quelle (6a); wobei der Raum (3) auf der Seite, die der durchlässigen Wand (5) gegenüberliegt, durch eine in Längsrichtung symmetrische gekrümmte und konvexe reflektierende Wand (7) begrenzt ist, zum Übertragen der von den Quellen (6a, 6b) abgegebenen Infrarotstrahlung an einen Außenbereich angrenzend an die durchlässige Wand (5) und zur lokalisierten Erhitzung eines in dem Außenbereich angeordneten Gegenstands; wobei die Heizvorrichtung mindestens ein Gerät (8) zur Messung der Temperatur umfasst, ausgestattet mit mindestens einem Hauptsensor (9), um Augenblick für Augenblick den Temperaturwert zu messen, der von dem zu erhitzenden Gegenstand angenommen wird, wenn er sich in dem Außenbereich angrenzend an die durchlässige Wand (5) befindet; wobei das Gerät (8) von einer Elektronikeinheit für die Steuerung und Verwaltung der Leistung gesteuert wird, die von den Quellen (6a, 6b) abgegeben wird; wobei der Hauptsensor (9) ein Pyrometer ist, gerichtet auf den Außenbereich angrenzend an die durchlässige Wand (5), zur kontaktfreien Messung des Temperaturwerts, der von dem zu erhitzenden Gegenstand angenommen wird; **dadurch gekennzeichnet, dass** sie Mittel (12) zur Kalibrierung der Messvorrichtung (8) umfasst, zur optimalen Kalibrierung der Vorrichtung (8) in Abhängigkeit von mindestens der Farbe und/oder der Oberflächenbeschaffenheit des jeweiligen zu erhitzenden Gegenstands zu jedem Augenblick; wobei die Kalibriermittel (12) einen schachtelartigen Körper (13) umfassen, der einen Kalibriersensor enthält, bestehend aus einem zusätzlichen Pyrometer, gewählt von der Art des Hauptsensors (9), und einem Kontakttemperatursensor, wobei der Kalibriersensor und der Kontakttemperatursensor zuvor auf dem zu erhitzenden Gegenstand angebracht werden können zum Zwecke einer zweifachen Messung der Temperatur und der Berechnung des Emissionskoeffizienten des jeweiligen zu erhitzenden Gegenstands zu jedem Augenblick.

2. Die Heizvorrichtung gemäß Anspruch 1, **dadurch gekennzeichnet, dass** der Erzeuger (4) eine erste zentrale Quelle (6a) und ein Paar seitlicher Quellen (6b) umfasst, die näher an der durchlässigen Wand (5) angeordnet sind.

3. Die Heizvorrichtung gemäß Anspruch 1, **dadurch gekennzeichnet, dass** der Erzeuger (4) eine erste zentrale Quelle (6a) und ein Paar seitlicher Quellen (6b) umfasst, die näher an der durchlässigen Wand (5) und zwischen einem zweiten Paar der seitlichen Quellen (6b) angeordnet sind, die sich noch näher an der durchlässigen Wand (5) befinden.

4. Die Heizvorrichtung gemäß einem oder mehreren der obigen Ansprüche, **dadurch gekennzeichnet, dass** jede der Quellen (6a, 6b) eine Quarzhalogenlampe ist.

5. Die Heizvorrichtung gemäß Anspruch 1, **dadurch gekennzeichnet, dass** die Elektronikeinheit Anweisungen umfasst, um wahlweise Folgendes auszuführen: einen manuellen Modus, der einer konstanten Leistungsabgabe entspricht, entsprechend einem von einem Benutzer gewählten Wert, einen Automatikmodus, in dem der abgegebene Leistungswert als Funktion eines maximalen Temperaturwerts gesteuert wird, der vom Benutzer für den zu erhitzenden Gegenstand gewählt wird, und einen variablen Temperaturmodus, bestehend aus einer Vielzahl von Schritten von vorkonfigurierbarer Dauer, wobei jeder der Schritte entsprechend jeweiligen vorkonfigurierbaren maximalen Temperaturwerten für den zu erhitzenden Gegenstand arbeitet.

6. Die Heizvorrichtung gemäß Anspruch 1 oder 5, **dadurch gekennzeichnet, dass** der Hauptsensor (9) einer kurzen Seite der durchlässigen Wand (5) zugewandt ist, eine längliche rechteckige Form habend.

7. Die Heizvorrichtung gemäß Anspruch 1 oder 6, **dadurch gekennzeichnet, dass** das Pyrometer in einer schrägen Leitung (10) untergebracht ist, die mit einer Öffnung (10a) derselben dem Außenbereich zugewandt ist, wobei das Pyrometer von der Öffnung (10a) beabstandet ist.

8. Die Heizvorrichtung gemäß Anspruch 7, **dadurch gekennzeichnet, dass** das Gerät (8) einen zusätzlichen Temperatursensor umfasst, für die Messung des Temperaturwerts Augenblick für Augenblick innerhalb der Leitung (10) und die optimale Bestimmung des Temperaturwerts des zu erhitzenden Gegenstands, die der Ablesung durch den Hauptsensor (9) minus den Betrag entspricht, der von der realen Temperatur der Leitung (10), gemessen durch den zusätzlichen Sensor, stammt.

9. Die Heizvorrichtung gemäß einem oder mehreren der obigen Ansprüche, **dadurch gekennzeichnet, dass** sie einen ersten Kühlkreislauf (16) umfasst, der Wasser nutzt, und einen zweiten Kühlkreislauf (17), der Luft nutzt, für das Gehäuse (2) und/oder für die Quellen (6a, 6b).

10. Die Heizvorrichtung gemäß einem oder mehreren der obigen Ansprüche, **dadurch gekennzeichnet, dass** sie einen Wechselrichter zum Versorgen der Quellen (6a, 6b) mit Gleichstrom von veränderlicher Intensität umfasst.

11. Die Heizvorrichtung gemäß einem oder mehreren der obigen Ansprüche, **dadurch gekennzeichnet, dass** das Gehäuse (2) mit einem Griff (2a) für den praktischen Transport durch einen Bediener und/oder mit einer Halterung für die stabile und lösbare mechanische Kopplung mit einem Ständer oder mit einer verstellbaren Stütze für den statischen Gebrauch ausgestattet ist.

## Revendications

1. Dispositif de chauffage, qui comprend au moins une coque (2) qui définit intérieurement un compartiment (3) pour recevoir un générateur (4) de rayonnement infrarouge, ledit compartiment (3) étant délimité au moins par une paroi (5) qui est transparente au rayonnement infrarouge, pour délivrer un rayonnement infrarouge vers l'extérieur, ledit générateur (4) comprenant une pluralité de sources de rayonnement infrarouge (6a, 6b) qui ont une structure de forme allongée, lesdites sources (6a, 6b) étant agencées parallèlement les unes aux autres à l'intérieur dudit compartiment (3) avec une distribution longitudinalement symétrique, une première centrale desdites sources (6a) étant interposée entre des sources latérales respectives (6b), qui sont agencées plus près de ladite paroi transparente (5) par rapport à ladite source centrale (6a), du côté opposé par rapport à ladite paroi transparente (5), ledit compartiment (3) étant délimité par une paroi réfléchissante (7) incurvée et convexe, longitudinalement symétrique, pour acheminer le rayonnement infrarouge délivré par lesdites sources (6a, 6b) vers une zone extérieure adjacente à ladite paroi transparente (5) et le chauffage localisé d'un objet, agencé dans ladite zone extérieure, ledit dispositif de chauffage comprenant au moins un appareil (8) de mesure de la température, muni d'au moins un capteur principal (9), pour la mesure instant par instant de la valeur de température prise par l'objet à chauffer, lorsqu'il est agencé au niveau de ladite zone extérieure adjacente à ladite paroi transparente (5), ledit appareil (8) étant commandé par une unité électronique pour la commande et la gestion de la puissance délivrée par lesdites sources (6a, 6b), ledit capteur principal (9) étant un pyromètre, dirigé vers ladite zone extérieure adjacente à ladite paroi transparente (5), pour la mesure sans contact de la valeur de température prise par l'objet à chauffer, **caractérisé en ce qu'**il comprend des moyens d'étalonnage (12) dudit appareil de mesure (8), pour l'étalonnage optimal dudit appareil (8) en fonction au moins de la couleur et/ou du fini de surface de l'objet spécifique à chaque occurrence de chauffage, lesdits moyens d'étalonnage (12) comprenant un corps en forme de boîte (13) qui reçoit un capteur d'étalonnage, constitué par un pyromètre supplémentaire, choisi pour être du type dudit capteur principal (9), et un capteur de température de contact, ledit capteur d'étalonnage et ledit capteur de température de contact étant préalablement agencés sur l'objet à chauffer pour une double mesure de la température et le calcul du coefficient d'émissivité de l'objet spécifique à chaque occurrence de chauffage.

2. Dispositif de chauffage selon la revendication 1, **caractérisé en ce que** ledit générateur (4) comprend une première source centrale (6a) et une paire de sources latérales (6b), qui sont agencées plus près de ladite paroi transparente (5).

3. Dispositif de chauffage selon la revendication 1, **caractérisé en ce que** ledit générateur (4) comprend une première source centrale (6a), et une paire de sources latérales (6b) qui sont agencées plus près de ladite paroi transparente (5) et sont interposées entre une seconde paire desdites sources latérales (6b), qui sont encore plus près de ladite paroi transparente (5).

4. Dispositif de chauffage selon l'une ou plusieurs des revendications précédentes, **caractérisé en ce que** chacune desdites sources (6a, 6b) est une lampe quartz halogène.

5. Dispositif de chauffage selon la revendication 1, **caractérisé en ce que** ladite unité électronique comprend des instructions pour exécuter sélectivement un mode manuel, correspondant à une puissance de sortie constante, selon une valeur choisie par un utilisateur, un mode automatique, dans lequel la valeur de puissance délivrée est commandée en fonction d'une valeur de température maximale, choisie par l'utilisateur, pour l'objet à chauffer, et un mode de température variable, composé d'une pluralité d'étapes de durée pré-configurable, chacune desdites étapes fonctionnant selon des valeurs de température maximales pré-configurables et respectives pour l'objet à chauffer.

6. Dispositif de chauffage selon la revendication 1 ou 5, **caractérisé en ce que** ledit capteur principal (9) fait face à un petit côté de ladite paroi transparente (5), de forme rectangulaire allongée.

7. Dispositif de chauffage selon la revendication 1 ou 6, **caractérisé en ce que** ledit pyromètre est reçu dans un conduit incliné (10), faisant face à ladite zone extérieure avec une embouchure (10a) de celui-ci, ledit pyromètre étant espacé de ladite embouchure (10a).

8. Dispositif de chauffage selon la revendication 7, **caractérisé en ce que** ledit appareil (8) comprend un capteur de température auxiliaire, pour la mesure instant par instant de la valeur de température à l'intérieur dudit conduit (10), et l'évaluation optimale de la valeur de température de l'objet à chauffer, qui correspond à la lecture prise par ledit capteur principal (9) moins la contribution dérivée de la température réelle dudit conduit (10), mesurée par ledit capteur auxiliaire.

9. Dispositif de chauffage selon l'une ou plusieurs des revendications précédentes, **caractérisé en ce qu'**il comprend un premier circuit de refroidissement (16) utilisant de l'eau et un second circuit de refroidissement (17) utilisant de l'air pour ladite coque (2) et/ou pour lesdites sources (6a, 6b).

10. Dispositif de chauffage selon l'une ou plusieurs des revendications précédentes, **caractérisé en ce qu'**il comprend un inverseur, pour alimenter lesdites sources (6a, 6b) par un courant continu d'intensité variable.

11. Dispositif de chauffage selon l'une ou plusieurs des revendications précédentes, **caractérisé en ce que** ladite coque (2) est munie d'une poignée (2a), pour un mouvement confortable par un opérateur, et/ou d'une fixation pour un couplage mécanique stable et amovible à un socle ou à un support orientable, pour un usage statique.
